# EUROPEAN PATENT SPECIFICATION

(11) **EP 1 608 233 B1**
(45) Date of publication and mention of the grant of the patent: **05.03.2008**
(21) Application number: 04719391.7
(22) Date of filing: 11.03.2004
(51) Int. Cl.: A23L 1/00, A23G 3/00, A23G 1/00

(54) **GELLED FOOD PRODUCT WITH A LIQUID CENTRE**
GELLIERTES LEBENSMITTELPRODUKT MIT FLÜSSIGEM KERN
PRODUIT ALIMENTAIRE GELIFIE DONT LE CENTRE EST LIQUIDE

(30) Priority: 24.03.2003 GB 0306736
(43) Date of publication of application: 28.12.2005
(73) Proprietor: Nestec S.A., 1800 Vevey (CH)
(72) Inventor: HILL, Clare, York YO30 5TU (GB); DE ACUTIS, Rodolfo, York YO30 5TU (GB)
(86) International application number: PCT/EP2004/002490
(87) International publication number: WO 2004/084649

(56) References cited:
- WO-A-01/91721
- WO-A-02/30213
- WO-A-97/00620
- US-A- 5 607 716
- US-A1- 2001 024 678
- MANUFACTURING CONFECTIONER, vol. 82, no. 5, 2002, pages 65-72, XP008033085 HERSHEY, USA

## Description

### FIELD OF THE INVENTION

This invention is related to a food product comprising a gelled water-based shell and a liquid centre.

### BACKGROUND OF THE INVENTION

Gums and jellies constituted by water-based hydrocolloid gels represent a significant and growing proportion of the sugar based confectionery market (see Sugar Confectionery Manufacture edited by E B Jackson, Blackie 1990, pages 190 - 217 Chapter 10, Gums and Jellies by E T Best). Such products are usually solid and examples include pastilles, gummy bears, jelly babies and the like. However, liquid filled gelled products are also known and examples include Rowntrees Fruit Rush, Rowntrees Bursting Bugs and Betty Crocker Fruit Gushers. The shells of these products, which are often referred to as "liquid-filled gummies" are aqueous based hydrocolloid gels and are believed to be based on starch and/or gelatin.

The use of gelatin in food products has significant disadvantages. Food-grade gelatin is obtained from bovine or porcine raw materials and is not acceptable to certain groups on religious grounds or to vegetarians. Concerns have also been expressed as to the use of bovine products as a result of bovine spongiform encephalopathy ("BSE").

A hydrocolloid which has been suggested as a replacement for gelatin in the formation of gelled products is carrageenan. Carrageenans are generally obtained by extraction from seaweeds and are polysaccharides consisting of alternating copolymers of β(1→3)-D-galactose and α(1→4)-3,6-anhydro-D-galactose units. At least 8 types of carrageenan are known differing in the amount of sulphate ester and/or other substituent groups (see Stortz & Cerezo, Carbohydrate Research, 145, 219-235 (1986)). Iota carrageenan, kappa carrageenan and lambda carrageenan are the most common forms but of these only iota and kappa carrageenan have gelling properties. Salts are naturally present in the extracted carrageenans and commercial grades of carrageenan may contain added salts to increase gel strength.

WO 00/069275 in the name of Hercules Incorporated relates to the use of carrageenan as a gelatin replacement in sweetened food compositions.

WO 02/30214 in the name of C P Kelco US Inc relates to a gelatin-free gummy confection comprising gellan gum and nu-carrageenan, nu-/iota-carrageenan or both. No mention is made of liquid filled products.

EP-A-0 515 864 in the name of Hershey Foods Corporation relates to the use of a number of hydrocolloids as gelatin replacements whilst reducing the amount of fat in compositions such as caramel.

WO 02/30213 in the name of Société des Produits Nestlé SA relates to a food product comprising a gelatin-free water-based hydrocolloid casing enclosing a solid, liquid, soft or particulate core. The hydrocolloid may be carrageenan, alginate, agarose, gellan gum, pectin or a cellulose derivative.

WO 01/91721 and Manufacturing Confectioner 2002, p. 65-72 teach kappa and iota carrageenan blends.

It is an object of the present invention to provide a food product comprising a gelled water-based shell and a liquid centre wherein the shell avoids the use of gelatin and also has improved properties in terms of appearance, texture and ease of manufacture.

### SUMMARY OF THE INVENTION

The present invention provides a food product comprising a gelled water-based shell and a liquid centre characterised in that the water-based shell contains a mixture of kappa carrageenan and iota carrageenan in an amount sufficient to provide a gel texture, the relative proportions of kappa carrageenan and iota carrageenan being 60 to 90% by weight kappa carrageenan and 10% to 40% by weight iota carrageenan based on the sum of the weights of kappa and iota carrageenan.

The present invention also provides a process for the manufacture of a food product as defined above which comprises introducing the water-based shell composition in liquid form and the liquid centre into a mould so that the shell surrounds the centre and gelling the shell.

### DESCRIPTION OF THE DRAWINGS

Figure 1 is a graph showing the effect on gel temperature and viscosity of varying kappa carrageenen ratios in a shell composition.
Figure 2 is a graph showing optical density of the shell of liquid filled sweets.
Figure 3 is a graph of the influence of varying kappa carrageenen content on gel texture.

### DETAILED DESCRIPTION OF THE INVENTION

The shell material is a water-based composition containing sufficient of a mixture of kappa carrageenan and iota carrageenan to provide a gel texture. The relative proportions of kappa carrageenan and iota carrageenan in this mixture is 60 to 90 % by weight kappa carrageenan and 10 to 40% by weight iota carrageenan based on the sum of the weights of kappa and iota carrageenan and such a mixture will be referred to hereinafter as "kappa/iota carrageenan".

The composition of the shell material is water-based and is prepared initially in liquid form. The amount of kappa/iota carrageenan present in the shell material is sufficient to gel the composition and provide the desired texture in the gelled material. The minimum amount of kappa/iota carrageenan can be determined experimentally in any particular case but has generally been found to be about 1.5% by weight. As the amount of kappa/iota carrageenan is increased, the gel becomes stiffer and it will not generally be appropriate to include more than 5% by weight. The amount of kappa/iota carrageenan in the shell will preferably be from 1.7 to 4% by weight, more preferably 2 to 2.5% by weight. It should be understood that the amount of kappa/iota carrageenan in the shell material is measured as pure kappa and iota carrageenan on a dry substance basis as a proportion of the shell solids. The relative proportions of kappa and iota carrageenan are calculated in the same way. Many commercially available carrageenan preparations are not pure carrageenan but contain substantial amounts of other materials and this must be taken into account in any calculation.

Examples of the composition of suitable commercial sources of highly refined kappa and iota carrageenan are as follows:
kappa carrageenan: approximately 73% kappa and 4% iota
iota carrageenan: approximately 69% iota and 1% kappa.
The required blend of kappa/iota carrageenan can be prepared by mixing appropriate amounts of these materials. The proportions of kappa/iota carrageenan for use according to the present invention are as follows:
overall: 60 to 90% kappa, 10 to 40% iota
more preferred: 65 to 90% kappa, 10 to 35% iota
most preferred: 70 to 85% kappa, 15 to 30% iota.

The composition to form the shell is formed as a blend in water and other main ingredients will be one or more sweeteners. The sweetener may be a sugar, a sugar syrup, corn syrup or a sugar substitute such as maltitol, lactitol, mannitol, xylitol, sorbitol, or an artificial sweetener. If desired the shell can be made sugar free by using only sugar substitute. The composition may also contain acid, acidity regulator and colourant as appropriate in the normal quantities. Water is added as needed to dissolve the ingredients before the shell material is cooked to the desired solids content for depositing. Further drying may take place after depositing. The final solids content of the shell may be from 50 to 90%, preferably from 60 to 85%, more preferably from 75 to 85% by weight. The sweetener may be present in an amount of 45 to 88%, preferably 72 to 83% by weight based on the total weight of the final shell.

A water-based shell gelled with kappa/iota carrageenen will show a high level of transparency unless colourings or other materials are included which have the effect of reducing transparency. Preferably the shell is formulated in such a way that this natural transparency is retained. A 3.5 mm thick slice of the shell preferably has an optical density of 0.2 or less, more preferably 0.1 or less. A method for the measurement of the optical density of the shell is given below.

The liquid centre may be any appropriate composition for inclusion in a food product comprising a gelled water-based shell. The composition may be fat based such as a flavoured oil or chocolate or it may contain water and sweetener, for example a sugar, a sugar syrup, corn syrup or a sugar substitute such as maltitol, lactitol, mannitol, xylitol, sorbitol, or an artificial sweetener. If desired the liquid can be made sugar free by using only artificial sweetener and this may be particularly appropriate in combination with a sugar-free shell to provide an overall sugar free product. The liquid can contain other ingredients such as viscosifiers, humectants, colour, flavour, acid and/or functional ingredients such as minerals, vitamins and herbs. The water content of the composition will generally be from 10 to 30% by weight and the sweetener content from 70 to 90% by weight, in each case based on the total weight of the composition. The composition will generally have a viscosity in the range from 0.01 to 10,000 Pa s. The water activities of the shell and of the filling should be adjusted so that the filling remains liquid during the intended shelf life of the product.

The shell may have a thickness of 1mm to 10mm, preferably from 2mm to 7.5mm, more preferably from 2.5 to 5mm. The filling may comprise 5 to 90% of the overall product, preferably 7 to 30%, more preferably 10 to 25%.

The food product according to the invention may have any appropriate size or shape. Suitable shapes include spheres, hemispheres, cubes, teardrops, fruit shapes, animal shapes, insect shapes, pyramids and cylinders. The diameter (or largest dimension in the case of an irregularly shaped product) may be 10 to 50mm, preferably 12.5 to 40mm, more preferably 15 to 25mm.

The food product according to the present invention may be manufactured by a method which comprises introducing the water-based shell composition in liquid form and the liquid centre into a mould in such a manner that the shell surrounds the core and then gelling the shell. The shell composition may be introduced into the mould at elevated temperature and gelling takes place on cooling. For example the components may be introduced into starch moulds using a conventional filling apparatus such as a one shot Mogul head. The apparatus provides a co-axial deposit, initially depositing shell, then introducing a flow of filling co-axially with the shell material and finishing with just shell. As an alternative to starch moulds, metal or plastic moulds could also be used.

The use of kappa/iota carrageenan has surprisingly been found to produce good shell properties combined with ease of processing when used with the liquid filled food products according to the invention.

Kappa carrageenen is generally thought to produce a brittle gel so that using 50% or more kappa carrageenan would not have been expected to provide a gel with an acceptable texture. However, it has surprisingly been found that when a gel made using kappa/iota carrageenan is used as the shell for a liquid filled product such as a sweet, the texture is perceived as pleasant and the brittleness is even an advantage as it enhances the contrast in mouth-feel between the shell and the liquid. The whole sweet is perceived by the consumer as being chewy with bouncy characteristics.

As already noted, a shell formed from a composition gelled with kappa/iota carrageenen is transparent in the absence of ingredients that reduce its natural transparency and this is in contrast to gelatin/starch gels which tend to be opaque as a result of the presence of the starch in formulations which give suitable eating texture and processability. The transparency of the shell is a particular advantage in terms of the appearance of the product since it enables the consumer to see the filling which adds to the appeal of the product. A clearly visible filling is particularly advantageous when the filling contains active ingredients such as vitamins, minerals or herbs.

It is a particular advantage of the use of kappa/iota carrageenan that the advantageous properties can be achieved without the use of gelatin. Although the presence of gelatin is not absolutely excluded there is no particular reason why it is required and, in view of the disadvantages associated with the use of gelatin referred to above, it is preferred that the shell is gelatin free.

The use of kappa/iota carrageenen provides particular advantages in terms of viscosity in that the relatively high content of kappa carrageenan produces a liquid of relatively low viscosity. This is a particular advantage in terms of uniform free flow of the product into the mould and producing a uniform product with a well centred filling. In addition, tailing (the tendency for a trail of shell material to be deposited as the depositing head moves from one mould to another) is easier to avoid when using a shell composition of lower viscosity which makes high speed production of the products easier to achieve.

A further advantage of kappa/iota carrageenan is that the core material sets relatively quickly and, in particular, much more quickly than starch/gelatin based gels. Whilst the shell remains liquid, there is a tendency for the liquid filling to migrate to the edge of the shell which results in the filling being poorly centered. The fact that the shell is thin in places means that the filling has a tendency to leak during handling and storage of the product. Better centering of the filling and a reduced tendency to leak means that the shell can be made thinner and the filling can make up a larger proportion of the overall product. This further enhances the visibility of the filling, with the advantages discussed above.

### EXAMPLES

The invention is illustrated by the following examples.

### Example 1

Shell compositions were made to the following recipe, the amounts being in grams:

| | |
|---|---|
| water | 1800 |
| citric/malic acids (powder) | 30 |
| acidity regulator (sodium citrate) | 10 |
| high fructose corn syrup | 800 |
| 42DE glucose syrup | 2100 |
| carrageenan | 100 |
| sucrose | 2200 |

Three different compositions were made with the following carrageenens:
52% commercial kappa-carrageenan 48% commercial iota-carrageenan (52% kappa/48% iota based on the total of pure kappa and iota) outside the claimed scope.
75% commercial kappa-carrageenan 25% commercial iota-carrageenan (73% kappa/27% iota based on the total of pure kappa and iota)
100% commercial kappa-carrageenan (95% kappa/5% iota based on the total of pure kappa and iota) outside the claimed scope.

The three compositions referred to above were cooked to a total solids content of 77% and then deposited into starch moulds at 90°C using a centre-in-shell depositor with a centre having the following composition:

| | |
|---|---|
| sugar syrup | 99.5% |
| colour | 0.004% |
| flavour | 0.4%. |

The starch impressions were in the shapes of insects and animals as for the Rowntrees Bursting Bugs product. The filling was 12% by weight of the finished sweets. The sweets were cooled to 20°C in their starch trays and allowed to dry for 24 hours before being demoulded. The final total solids content of the shell was 79%.

Eating the sample with 52% commercial kappa-carrageenan and 48% commercial iota-carrageenan did not give a particularly strong liquid centre impression. The shell had a soft texture and so, when it was broken by the teeth, there was only a small contrast between the liquid filling and the pieces of shell.

With the sample 75% commercial kappa-carrageenan and 25% commercial iota-carrageenan, the moment at which the shell broke to release the filling was more clearly felt. This was due to the textural contrast between the shell and the liquid, making the liquid more noticeable in the mouth. Once the liquid had cleared from the mouth, the pieces of shell which remained were sufficiently cohesive to still be chewy and pleasant to eat.

The liquid release could clearly be felt in sample 100% commercial kappa-carrageenan, but once the liquid had cleared from the mouth, the fragments of shell remaining were brittle and gave a less pleasant eat.

### Example 2

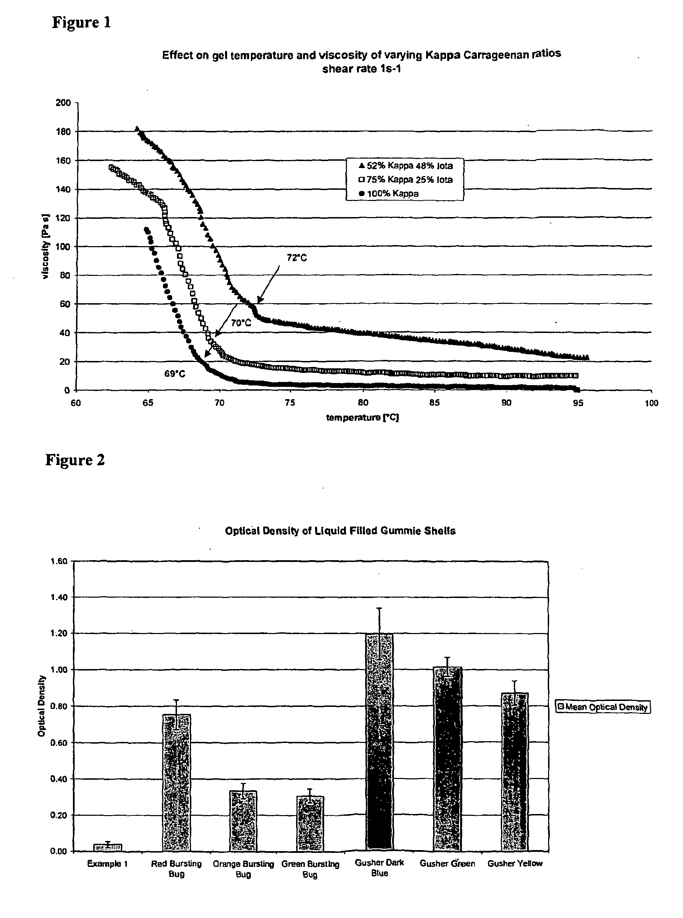

Viscosity as a function of temperature was measured for the three shell compositions referred to in Example 1 using a Haake RS 150 rheometer with concentric cylinder measuring system. The shear rate was constant (set at 1s⁻¹) and the temperature ramp was 1°C/minute. The results are shown in Figure 1. Viscosity decreases as % kappa increases and the gel temperature (inflection point indicated with an arrow) reduces slightly with increasing kappa.

### Example 3

Optical density of the shell of the product from example 1 (75% commercial kappa-carrageenan, 25% commercial iota-carrageenan) was measured and compared to the optical densities of the shells of the following other confectionery sweets:
Rowntrees Red Bursting Bug
Rowntrees Orange Bursting Bug
Rowntrees Green Bursting Bug
Betty Crocker Fruit Gushers Fruitomic Punch Dark Blue
Betty Crocker Fruit Gushers Fruitomic Punch Green
Betty Crocker Fruit Gushers Fruitomic Punch Yellow
The samples of the other sweets were purchased through normal commercial channels in March 2003.

The method was as follows:

A special cutting device was made by gluing two razor blades together with spacers placed in between the blades so that the blades were a fixed distance apart and the cutting edges parallel. Using callipers the blades were found to be 3.50 ± 0.05 mm apart. These blades were then used to cut slices having a uniform thickness from the shell of the liquid filled confectionery sweets. The slice was then sandwiched in between two glass microscope slides.

The optical density of each gel slice was measured using a GRETAG MACBETH D200-11 Transmission Densitometer. Before any measurements were taken the machine was calibrated using the method described in the operating instructions. The 3mm measuring aperture was placed in the machine, and the machine set to the Density Measurement mode (Mode '1'). The zero level was then set with two microscope slides in the optical path. The two slides used for zero calibration were then replaced by the gel slice sample held in between two glass slides. The optical density of the sample was then measured in the manner described in the instruction manual.

Four measurements were taken of each slice in different positions avoiding the edges, and slices from two different sweets were measured. The results were averaged and plotted together with error bars of 2 x standard deviation. The results are shown in Figure 2.

### Example 4

Confectionery sweets were prepared according to the shell recipe of Example 1 but using carrageenen having the following proportions of kappa to iota:
100% commercial kappa-carrageenan *
75% commercial kappa-carrageenan 25% commercial iota-carrageenan
60% commercial kappa-carrageenan 40% commercial iota-carrageenan
50% commercial kappa-carrageenan 50% commercial iota-carrageenan outside the claimed scope.
The sweets were moulded into cylindrical starch impressions with no filling and the sweets were 8mm tall with a diameter of 17.5mm.

The texture of the sweets was measured using a Stable Micro Systems TA-HD texture analyser fitted with a 40mm diameter cylindrical probe. Two compressions were made to a compression of 60% strain with a 5s time interval between the compressions. The probe speed was 1mm/s. 6 examples of each carrageenan ratio were analysed and values for hardness, cohesiveness and resilience were recorded.

The calculation of hardness, cohesiveness and resilience is shown in the following figure:

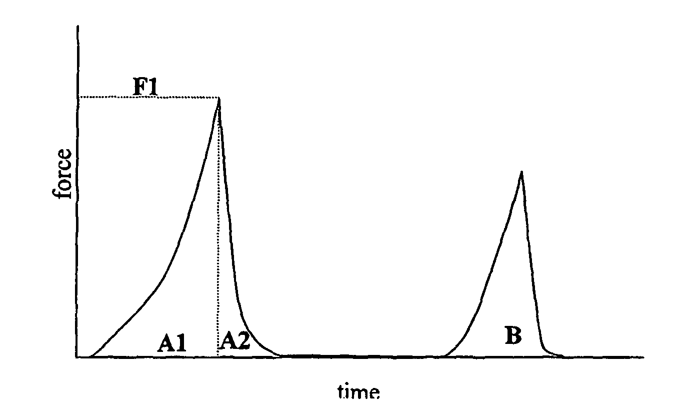

| | |
|---|---|
| Hardness : | Force F 1 |
| Cohesiveness: | Area B / (Area A1+ Area A2) |
| Resilience: | Area A2 / Area A1 |

Hardness is the force required to reach the defined percentage of strain. It is measured as the peak force during the first compression.

Cohesiveness is related to the work required to overcome the internal structure of the sample. It is calculated as the ratio of the positive area during the second compression to that during the first compression.

Resilience or elasticity corresponds to a measure of how rubber-like the sample is. It is calculated as the ratio of the area during recovery to the initial state from the first peak force to that required to reach the first peak force.

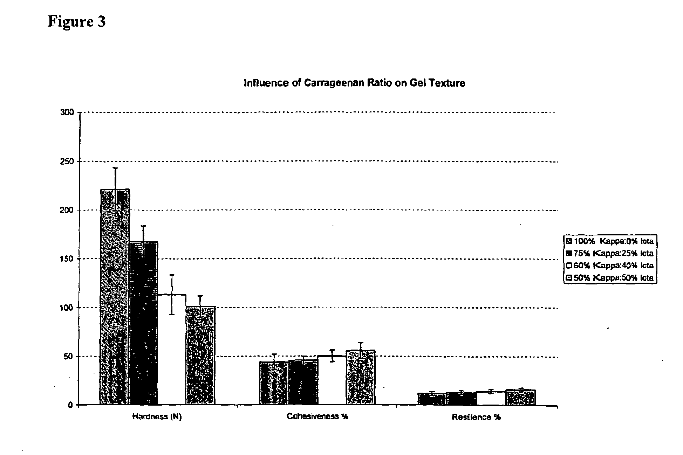

The results are shown in Figure 3 and they show that the texture of the shell changes as the amount of kappa carrageenen increases and, in particular, it becomes harder but resilience and cohesiveness decrease. This texture change leads to a shell which enhances the impact of the liquid filling in the mouth, the shell breaks easily when chewed to release the liquid and the hard texture of the shell has good contrast with the liquid filling when mixed in the mouth.

### Composition of Carrageenens

As noted above, the carrageenens used in the above examples were commercial highly refined kappa-carrageenan and commercial highly refined iota-carrageenan.
Moisture contents were measured by gravimetric determination of mass loss during oven drying at 102°C for 4 hours.
Protein was determined using the Kjeldahl method with a conversion factor of 6.25. Cation (Ca, Mg, Na, K) and sulphur determination was performed by ICP-AES (optical emission spectrometry with inductively coupled plasma) after microwave digestion. Assuming that the sulphur originates exclusively from carrageenan-bound sulphate, the total sulphate content was then recalculated.
Free sugars were determined by HPLC (high performance liquid chromatography).
The composition of these carrageenans was determined by ¹H- and ¹³C-NMR at the NIZO Food Research Institute (Netherlands). The sample preparation and the analysis conditions are described below.

### ¹H-NMR

The samples were dissolved at 70°C in 20mM Na₂HPO₄/D₂O to a concentration of about 0.8 % (w/v) and sonicated. The NMR spectra were recorded at 70°C on a Varian INOVA 600 spectrometer operating at 599.93 MHz. The interpretation of the spectra is based on the resonances of the anomeric protons of carrageenans between 5 and 5.7 ppm. The respective chemical shifts of kappa-, iota-, mu-, nu- and lambda-carrageenans are known, the other peaks in this area are designated as unidentified.
The unidentified material may be desulphated carrageenans, or even not a carrageenan material at all. It will not, however, be kappa-, iota-, mu-, nu- or lambda-carrageenan as these are determined by their known peaks. The carrageenan content is calculated as a molar percentage of the total resonances in this spectral region (excluding glucose and sucrose). Citrate can be identified by ¹H-NMR but was not detected.

### ¹³C-NMR

The samples were dissolved in H₂O, sonicated, dialysed against 10 mM NaHPO₄ and distilled water. Then, they were lyophilised and dissolved in D₂O to a concentration of about 8% (w/v). The NMR spectra were recorded at 74°C on a Bruker AMX500 spectrometer operating at 125.76 MHz. Typically 40000 scans were accumulated using an inter-pulse delay of 1.5s and WALTZ-16 proton decoupling. ¹H-NMR spectra taken before and after the ¹³C-NMR experiment were identical for both samples, indicating that the samples were stable during the ¹³C-NMR experiment.

### Calculation

The total carrageenan by product weight was estimated assuming that "non-carrageenan" and "total carrageenan" represent 100% of the product content. The "non-carrageenan" was obtained by summing up the moisture, proteins, free sugars, K, Na, Mg, and Ca contents. The weight by product weight content of the different types of carrageenans was obtained using the mole % values and recalculating the proportion of each type relative to the total carrageenans.

The results were as follows:

| Commercial kappa-carrageenan | |
|---|---|
| Carrageenans | |
| kappa (% w/w) | 73 |
| iota (% w/w) | 4 |
| mu (% w/w) | 2 |
| nu (% w/w) | n.d. |
| unidentified (% w/w) | 2 |

The remainder was moisture (around 12%), protein and salts. No free sugars were detected.

| Commercial iota-carrageenan | |
|---|---|
| Carrageenans | |
| kappa (% w/w) | 1 |
| iota (% w/w) | 69 |
| mu (% w/w) | n.d. |
| nu (% w/w) | n.d. |
| unidentified (% w/w) | 9 |

The remainder was moisture (around 12%), protein and salts. No free sugars were detected.
(n.d. = not detected)

## Claims

1. A food product comprising a gelled water-based shell and a liquid centre **characterised in that** the water-based shell contains a mixture of kappa carrageenan and iota carrageenan in an amount sufficient to provide a gel texture, the relative proportions of-kappa carrageenan and iota carrageenan being 60 to 90% by weight kappa carrageenan and 10 to 40% by weight iota carrageenan based on the sum of the weights of kappa and iota carrageenan.

2. A food product as claimed in claim 1 wherein the shell contains, on a dry substance basis, 1.5% to 5% by weight of the mixture of kappa and iota carrageenans.

3. A food product as claimed in claim 1 wherein the shell contains, on a dry substance basis, 1.7% to 4% by weight of the mixture of kappa and iota carrageenans.

4. A food product as claimed in claim 1 wherein the shell contains, on a dry substance basis, 2% to 2.5% by weight of the mixture of kappa and iota carrageenans.

5. A food product as claimed in any of claims 1 to 4 wherein the mixture of kappa and iota carrageenans contains 65 to 90% kappa and 10 to 35% iota based on the total weight of kappa and iota.

6. A food product as claimed in any of claims 1 to 4 wherein the mixture of kappa and iota carrageenans contains 70 to 85% kappa and 15 to 30% iota based on the total weight of kappa and iota.

7. A food product as claimed in any of claims 1 to 6 wherein the shell is formed of a composition comprising in addition to the blend of kappa and iota carrageenan, water and one or more sweeteners.

8. A food product as claimed in claim 7 wherein the sweetener is a sugar, a sugar syrup, com syrup or a sugar substitute or an artificial sweetener.

9. A food product as claimed in claim 7 or 8 wherein the sweetener is present in an amount of 45 to 88% of the shell.

10. A food product as claimed in claim 7 or 8 wherein the sweetener is present in an amount of 72 to 83% of the shell.

11. A food product as claimed in any of claims 1 to 10 wherein the composition forming the shell also contains acid, acidity regulator and/or colourant.

12. A food product as claimed in any of claims 1 to 11 wherein the solids content of the shell is 50 to 90% by weight.

13. A food product as claimed in any of claims 1 to 11 wherein the solids content of the shell is 60 to 85% by weight.

14. A food product as claimed in any of claims 1 to 11 wherein the solids content of the shell is 75 to 85% by weight.

15. A food product as claimed in any of claims 1 to 14 wherein a 3.5mm thick slice of the shell has an optical density of 0.2 or less.

16. A food product as claimed in any of claims 1 to 14 where a 3.5mm thick slice of the shell has an optical density of 0.1 or less.

17. A food product as claimed in any of claims 1 to 16 wherein the liquid centre is a fat based composition.

18. A food product as claimed in claim 17 wherein the liquid centre is a flavoured oil or chocolate.

19. A food product as claimed in any of claims 1 to 18 wherein the liquid centre contains water and sweetener.

20. A food product as claimed in claim 19 wherein the sweetener is a sugar, a sugar syrup, com syrup or a sugar substitute or an artificial sweetener.

21. A food product as claimed in claim 20 wherein the liquid centre contains colour, flavour, acid and/or one or more functional ingredients.

22. A food product as claimed in claim 21 wherein the liquid centre contains at least one of minerals, vitamins and herbs.

23. A food product as claimed in any of claims 19 to 22 wherein the water content of the liquid centre is from 10 to 30% by weight and the sweetener content is
from 70 to 90% by weight.

24. A food product as claimed in any of claims 1 to 23 wherein the viscosity of the liquid centre is in the range from 0.01 to 10,000 Pas.

25. A food product as claimed in any of claims 1 to 24 wherein the shell has a thickness of 1 mm to 10mm.

26. A food product as claimed in any of claims 1 to 24 wherein the shell has a thickness of 2mm to 7.5mm

27. A food product as claimed in any of claims 1 to 24 wherein the shell has a thickness of 2.5 to 5mm.

28. A food product as claimed in any of claims 1 to 27 wherein the liquid filling comprises 5 to 90% of the product.

29. A food product as claimed in any of claims 1 to 27 wherein the liquid filling comprises 7 to 30% of the product.

30. A food product as claimed in any of claims 1 to 27 wherein the liquid filling comprises 10 to 25% of the product.

31. A food product as claimed in any of claims 1 to 30 which is gelatin free.

32. A process for the manufacture of a food product as claimed in any of claims 1 to 31, which comprises introducing the water-based shell composition in liquid form and the liquid centre into a mould so that the shell surrounds the centre and gelling the shell.

33. A process as claimed in claim 32 wherein the components are introduced into starch moulds.

34. A process as claimed in claim 32 or 33 wherein the water-based shell composition in liquid form and the liquid centre are introduced into a mould using an apparatus which provides a co-axial deposit, initially depositing shell, then introducing a flow of filling co-axially with the shell material and finishing with just shell.

## Patentansprüche

1. Lebensmittelprodukt, das eine gelierte Schale auf Wasserbasis und ein flüssiges Zentrum aufweist, **dadurch gekennzeichnet, dass** die Schale auf Wasserbasis eine Mischung aus Kappa-Carrageenan und Iota-Carrageenan in einer Menge enthält, die ausreicht, dass eine Geltextur erhalten wird, wobei die relativen Proportionen von Kappa-Carrageenan und Iota-Carrageenan 60 bis 90 Gew.-% Kappa-Carrageenan und 10 bis 40 Gew.-% Iota-Carrageenan, bezogen auf die Summe der Gewichte von Kappa- und Iota-Carrageenan, betragen.

2. Lebensmittelprodukt nach Anspruch 1, wobei die Schale, auf Trockensubstanzbasis, 1,5 bis 5 Gew.-% der Mischung von Kappa- und Iota-Carrageenanen enthält.

3. Lebensmittelprodukt nach Anspruch 1, wobei die Schale, auf Trockensubstanzbasis, 1,7 bis 4 Gew.-% der Mischung aus Kappa- und Iota-Carrageenanen enthält.

4. Lebensmittelprodukt nach Anspruch 1, wobei die Schale, auf einer Trockensubstanzbasis, 2 bis 2,5 Gew.-% der Mischung aus Kappa- und Iota-Carrageenanen enthält.

5. Lebensmittelprodukt nach irgendeinem der Ansprüche 1 bis 5, wobei die Mischung aus Kappa- und Iota-Carrageenanen 65 bis 90% Kappa und 10 bis 35% Iota enthält, bezogen auf das Gesamtgewicht aus Kappa und Iota.

6. Lebensmittelprodukt nach irgendeinem der Ansprüche 1 bis 4, wobei die Mischung aus Kappa- und Iota-Carrageenanen 70 bis 85% Kappa und 15 bis 30% Iota enthält, bezogen auf das Gesamtgewicht aus Kappa und Iota.

7. Lebensmittelprodukt nach irgendeinem der Ansprüche 1 bis 6, wobei die Schale aus einer Zusammensetzung gebildet wird, die, zusätzlich zu der Mischung aus Kappa- und Iota-Carrageenan, Wasser und eines oder mehrere Süßungsmittel umfasst.

8. Lebensmittelprodukt nach Anspruch 7, wobei das Süßungsmittel ein Zucker, ein Zuckersirup, Maissirup oder ein Zuckerersatzstoff oder ein künstliches Süßungsmittel ist.

9. Lebensmittelprodukt nach Anspruch 7 oder 8, wobei das Süßungsmittel in einer Menge von 45 bis 88% der Schale vorhanden ist.

10. Lebensmittelprodukt nach Anspruch 7 oder 8, wobei das Süßungsmittel in einer Menge von 72 bis 83% der Schale vorhanden ist.

11. Lebensmittelprodukt nach irgendeinem der Ansprüche 1 bis 10, wobei die Zusammensetzung, die die Schale bildet, auch Säure, einen Aciditätsregulator und/oder ein Färbemittel enthält.

12. Lebensmittelprodukt nach irgendeinem der Ansprüche 1 bis 11, wobei der Feststoffgehalt der Schale 50 bis 90 Gew.-% beträgt.

13. Lebensmittelprodukt nach irgendeinem der Ansprüche 1 bis 11, wobei der Feststoffgehalt der Schale 60 bis 85 Gew.-% beträgt.

14. Lebensmittelprodukt nach irgendeinem der Ansprüche 1 bis 11, wobei der Feststoffgehalt der Schale 75 bis 85 Gew.-% beträgt.

15. Lebensmittelprodukt nach irgendeinem der Ansprüche 1 bis 14, wobei eine 3,5 mm dicke Scheibe der Schale eine optische Dichte von 0,2 oder weniger aufweist.

16. Lebensmittelprodukt nach irgendeinem der Ansprüche 1 bis 14, wobei eine 3,5 mm dicke Scheibe der Schale eine optische Dichte von 0,1 oder weniger aufweist.

17. Lebensmittelprodukt nach irgendeinem der Ansprüche 1 bis 16, wobei das flüssige Zentrum eine Zusammensetzung auf Fettbasis ist.

18. Lebensmittelprodukt nach Anspruch 17, wobei das flüssige Zentrum ein aromatisiertes Öl oder Schokolade ist.

19. Lebensmittelprodukt nach irgendeinem der Ansprüche 1 bis 18, wobei das flüssige Zentrum Wasser und Süßungsmittel enthält.

20. Lebensmittelprodukt nach Anspruch 19, wobei das Süßungsmittel ein Zucker, ein zuckersirup, Maissirup oder ein Zuckersatzstoff oder ein künstliches Süßungsmittel ist.

21. Lebensmittelprodukt nach Anspruch 20, wobei das flüssige Zentrum Farbe, Aroma, Säure und/oder einen oder mehrere funktionelle(n) Bestandteil(e) enthält.

22. Lebensmittelprodukt nach Anspruch 21, wobei das flüssige Zentrum wenigstens eines von Mineralstoffen, Vitaminen und Kräutern enthält.

23. Lebensmittelprodukt nach irgendeinem der Ansprüche 19 bis 22, wobei der Wassergehalt des flüssigen Zentrums von 10 bis 30 Gew.-% beträgt und der Gehalt des Süßungsmittels von 70 bis 90% beträgt.

24. Lebensmittelprodukt nach irgendeinem der Ansprüche 1 bis 23, wobei die Viskosität des flüssigen Zentrums im Bereich von 0,01 bis 10.000 Pas liegt.

25. Lebensmittelprodukt nach irgendeinem der Ansprüche 1 bis 24, wobei die Schale eine Dicke von 1 mm bis 10 mm aufweist.

26. Lebensmittelprodukt nach irgendeinem der Ansprüche 1 bis 24, wobei die Schale eine Dicke von 2 mm bis 7,5 mm aufweist.

27. Lebensmittelprodukt nach irgendeinem der Ansprüche 1 bis 24, wobei die Schale eine Dicke von 2,5 bis 5 mm aufweist.

28. Lebensmittelprodukt nach irgendeinem der Ansprüche 1 bis 27, wobei die flüssige Füllung 5 bis 90% des Produkts bildet.

29. Lebensmittelprodukt nach irgendeinem der Ansprüche 1 bis 27, wobei die flüssige Füllung 7 bis 30% des Produkts bildet.

30. Lebensmittelprodukt nach irgendeinem der Ansprüche 1 bis 27, wobei die flüssige Füllung 10 bis 25% des Produkts bildet.

31. Lebensmittelprodukt nach irgendeinem der Ansprüche 1 bis 30, das gelatinefrei ist.

32. Verfahren zur Herstellung eines Lebensmittelprodukts nach irgendeinem der Ansprüche 1 bis 31, das die Einführung der Zusammensetzung für die Schale auf Wasserbasis in flüssiger Form sowie das flüssige Zentrum so in eine Form umfasst, dass die Schale das Zentrum umgibt, und das Gelieren der Schale.

33. Verfahren nach Anspruch 32, wobei die Bestandteile in Stärkeformen gegeben werden.

34. Verfahren nach Anspruch 32 oder 33, wobei die Zusammensetzung für die Schale auf Wasserbasis in flüssiger Form sowie das flüssige Zentrum in eine Form unter Verwendung einer Apparatur abgegeben werden, die eine koaxiale Abgabe gewährleistet, wobei man anfangs Schale abgibt, dann einen Strom an Füllung koaxial zu dem Schalenmaterial einführt und mit nur Schale aufhört.

## Revendications

1. Produit alimentaire comprenant une enveloppe gélifiée à base d'eau et un centre liquide, **caractérisé en ce que** l'enveloppe à base d'eau contient un mélange de carraghénine kappa et de carraghénine iota en une quantité suffisante pour fournir une texture de gel, les proportions relatives de carraghénine kappa et de carraghénine iota étant de 60 à 90 % en poids de carraghénine kappa et de 10 à 40 % en poids de carraghénine iota par rapport à la somme des poids des carraghénines kappa et iota.

2. Produit alimentaire selon la revendication 1, dans lequel l'enveloppe contient, sur la base des substances sèches, de 1,5 % à 5 % en poids du mélange de carraghénines kappa et iota.

3. Produit alimentaire selon la revendication 1, dans lequel l'enveloppe contient, sur la base des substances sèches, de 1,7 % à 4 % en poids du mélange de carraghénines kappa et iota.

4. Produit alimentaire selon la revendication 1, dans lequel l'enveloppe contient, sur la base des substances sèches, de 2 % à 2,5 % en poids du mélange de carraghénines kappa et iota.

5. Produit alimentaire selon l'une quelconque des revendications 1 à 4, dans lequel le mélange de carraghénines kappa et iota contient de 65 à 90 % de kappa et de 10 à 35 % d'iota par rapport au poids total de kappa et iota.

6. Produit alimentaire selon l'une quelconque des revendications 1 à 4, dans lequel le mélange de carraghénines kappa et iota contient de 70 à 85 % de kappa et de 15 à 30 % d'iota par rapport au poids total de kappa et iota.

7. Produit alimentaire selon l'une quelconque des revendications 1 à 6, dans lequel l'enveloppe est formée d'une composition comprenant de l'eau et un ou plusieurs édulcorants en plus du mélange de carraghénines kappa et iota.

8. Produit alimentaire selon la revendication 7, dans lequel l'édulcorant est un sucre, un sirop de sucre, du sirop de maïs ou un succédané de sucre ou un édulcorant artificiel.

9. Produit alimentaire selon la revendication 7 ou 8, dans lequel l'édulcorant est présent en une quantité de 45 à 88 % de l'enveloppe.

10. Produit alimentaire selon la revendication 7 ou 8, dans lequel l'édulcorant est présent en une quantité de 72 à 83 % de l'enveloppe.

11. Produit alimentaire selon l'une quelconque des revendications 1 à 10, dans lequel la composition formant l'enveloppe contient aussi un acide, un régulateur d'acidité et/ou un colorant.

12. Produit alimentaire selon l'une quelconque des revendications 1 à 11, dans lequel la teneur en solides de l'enveloppe est de 50 à 90 % en poids.

13. Produit alimentaire selon l'une quelconque des revendications 1 à 11, dans lequel la teneur en solides de l'enveloppe est de 60 à 85 % en poids.

14. Produit alimentaire selon l'une quelconque des revendications 1 à 11, dans lequel la teneur en solides de l'enveloppe est de 75 à 85 % en poids.

15. Produit alimentaire selon l'une quelconque des revendications 1 à 14, dans lequel une tranche de l'enveloppe de 3,5 mm d'épaisseur a une densité optique de 0,2 ou moins.

16. Produit alimentaire selon l'une quelconque des revendications 1 à 14, dans lequel une tranche de l'enveloppe de 3,5 mm d'épaisseur a une densité optique de 0,1 ou moins.

17. Produit alimentaire selon l'une quelconque des revendications 1 à 16, dans lequel le centre liquide est une composition à base de graisse.

18. Produit alimentaire selon la revendication 17, dans lequel le centre liquide est une huile aromatisée ou du chocolat.

19. Produit alimentaire selon l'une quelconque des revendications 1 à 18, dans lequel le centre liquide contient de l'eau et un édulcorant.

20. Produit alimentaire selon la revendication 19, dans lequel l'édulcorant est un sucre, un sirop de sucre, du sirop de maïs ou un succédané de sucre ou un édulcorant artificiel.

21. Produit alimentaire selon la revendication 20, dans lequel le centre liquide contient un colorant, un arôme, un acide et/ou un ou plusieurs ingrédients fonctionnels.

22. Produit alimentaire selon la revendication 21, dans lequel le centre liquide contient au moins un élément choisi parmi des minéraux, des vitamines et des herbes.

23. Produit alimentaire selon l'une quelconque des revendications 19 à 22, dans lequel la teneur en eau du centre liquide est de 10 à 30 % en poids et la teneur en édulcorant est de 70 à 90 % en poids.

24. Produit alimentaire selon l'une quelconque des revendications 1 à 23, dans lequel la viscosité du centre liquide est comprise entre 0,01 à 10 000 Pas.

25. Produit alimentaire selon l'une quelconque des revendications 1 à 24, dans lequel l'enveloppe a une épaisseur de 1 mm à 10 mm.

26. Produit alimentaire selon l'une quelconque des revendications 1 à 24, dans lequel l'enveloppe a une épaisseur de 2 mm à 7,5 mm.

27. Produit alimentaire selon l'une quelconque des revendications 1 à 24, dans lequel l'enveloppe a une épaisseur de 2,5 à 5 mm.

28. Produit alimentaire selon l'une quelconque des revendications 1 à 27, dans lequel la garniture liquide constitue de 5 à 90 % du produit.

29. Produit alimentaire selon l'une quelconque des revendications 1 à 27, dans lequel la garniture liquide constitue de 7 à 30 % du produit.

30. Produit alimentaire selon l'une quelconque des revendications 1 à 27, dans lequel la garniture liquide constitue de 10 à 25 % du produit.

31. Produit alimentaire selon l'une quelconque des revendications 1 à 30, qui est exempt de gélatine.

32. Procédé de fabrication d'un produit alimentaire selon l'une quelconque des revendications 1 à 31, comprenant l'introduction de la composition de l'enveloppe à base d'eau à l'état liquide et du centre liquide dans un moule de façon à ce que l'enveloppe entoure le centre, et la gélification de l'enveloppe.

33. Procédé selon la revendication 32, dans lequel les composants sont introduits dans des moules en amidon.

34. Procédé selon la revendication 32 ou 33, dans lequel on introduit la composition de l'enveloppe à base d'eau à l'état liquide et le centre liquide dans un moule en utilisant un appareil qui fournit un dépôt coaxial, initialement en déposant l'enveloppe, ensuite en introduisant un flux de garniture de façon coaxiale avec la matière de l'enveloppe et en finissant juste avec l'enveloppe.
